# EUROPEAN PATENT APPLICATION

(11) **EP 3 846 078 A1**
(43) Date of publication of application: **07.07.2021**
(21) Application number: 19930191.2
(22) Date of filing: 05.11.2019
(51) Int. Cl.: G06K 9/20

(54) **UNDER-SCREEN FINGERPRINT RECOGNITION APPARATUS, LCD FINGERPRINT RECOGNITION SYSTEM, AND ELECTRONIC DEVICE**

(71) Applicant: SHENZHEN GOODIX TECHNOLOGY CO., LTD., Shenzhen, Guangdong 518045 (CN)
(72) Inventor: ZENG, Fanzhou, Shenzhen, Guangdong 518045 (CN); XIONG, Feng, Shenzhen, Guangdong 518045 (CN)
(74) Representative: Elzaburu S.L.P.
(86) International application number: PCT/CN2019/115708
(87) International publication number: WO 2021/087742

(57) **Abstract**

The present application provides an under-screen fingerprint identification apparatus, an LCD fingerprint identification system and an electronic device. The under-screen fingerprint identification apparatus is applied to an electronic device with a liquid crystal display screen. The under-screen fingerprint identification apparatus is located under the liquid crystal display screen, and a fingerprint detection area of the under-screen fingerprint identification apparatus is at least partially located in a display area of the liquid crystal display screen. The under-screen fingerprint identification apparatus includes a detection light source configured to emit probe light and a fingerprint identification module located under the liquid crystal display screen. The probe light irradiates a finger above the fingerprint detection area to form fingerprint detection light carrying fingerprint information. The fingerprint identification module is configured to receive the fingerprint detection light passing through the liquid crystal display screen to obtain a fingerprint image of the finger, thus implementing under-screen fingerprint identification of an electronic device using an LCD screen.

## Description

### TECHNICAL FIELD

The present application relates to the field of fingerprint identification technologies, and in particular, to an under-screen fingerprint identification apparatus, an LCD fingerprint identification system and an electronic device.

### BACKGROUND

As smartphones enter an era of full-screen, a screen-to-body ratio of a mobile phone has become larger and larger, and under-screen fingerprint identification technologies become a trend.

At present, an optical under-screen fingerprint technology of a mobile phone with an organic light-emitting diode (OLED) screen has entered a commercial era. A mobile phone with an OLED screen uses self-illumination of OLED screen pixels as a light source. Light irradiates a finger to form fingerprint detection light which returns and passes through the OLED screen, and is received by an optical fingerprint sensor under the screen, so as to implement fingerprint image collection and fingerprint identification. Due to high costs of the OLED screen, the mobile phone using the OLED screen is also relatively expensive. A liquid crystal display (LCD) screen has many advantages such as thin body, power saving, and no radiation, and is widely used in electronic products such as a television, a computer, and a mobile phone, etc.

However, existing electronic products do not use an LCD screen to realize a function of under-screen fingerprint identification.

### SUMMARY

The present application provides an under-screen fingerprint identification apparatus, an LCD fingerprint identification system and an electronic device, so as to solve a problem that an existing electronic product does not use an LCD screen to implement under-screen fingerprint identification.

In a first aspect, the present application provides an under-screen fingerprint identification apparatus, applied to an electronic device with a liquid crystal display screen, where the under-screen fingerprint identification apparatus is located under the liquid crystal display screen, and a fingerprint detection area of the under-screen fingerprint identification apparatus is at least partially located in a display area of the liquid crystal display screen;
the under-screen fingerprint identification apparatus includes a detection light source and a fingerprint identification module located under the liquid crystal display screen; where the detection light source is configured to be disposed under a protective cover or a backlight module of the liquid crystal display screen, to emit probe light to a finger above the liquid crystal display screen; the probe light irradiates the finger above the fingerprint detection area to form fingerprint detection light carrying fingerprint information, and the fingerprint identification module is configured to receive the fingerprint detection light that passes through the liquid crystal display screen to obtain a fingerprint image of the finger.

In a specific embodiment of the present application, the liquid crystal display screen includes a backlight module, the fingerprint identification module is located under the backlight module, and the backlight module is formed with a light-transmitting area configured to allow the fingerprint detection light to pass through, so that the fingerprint detection light passes through the backlight module and is transmitted to the fingerprint identification module.

In a specific embodiment of the present application, the probe light and/or the fingerprint detection light is infrared light, and backlight provided by the backlight module is visible light.

In a specific embodiment of the present application, the fingerprint identification module is fixed to a bottom plate of a middle frame of the liquid crystal display screen; where the bottom plate of the middle frame is provided with a first opening in an area opposite to the fingerprint identification module, and the first opening is configured to allow the fingerprint detection light that passes through the backlight module to pass through the middle frame and be transmitted to the fingerprint identification module.

In a specific embodiment of the present application, the backlight module includes an optical film configured to allow the fingerprint detection light to pass through, and a steel plate configured to support the optical film, where the fingerprint identification module is disposed under the steel plate, and the steel plate is provided with a second opening in an area corresponding to the fingerprint identification module, and the second opening is configured to allow the fingerprint detection light that passes through the optical film to pass through the steel plate and be transmitted to the fingerprint identification module; where the second opening corresponds to the light-transmitting area.

In a specific embodiment of the present application, a steel plate of the backlight module is provided with a second opening in an area corresponding to the fingerprint identification module, the fingerprint identification module is disposed at the second opening, and the fingerprint identification module is attached to a bottom of the steel plate or the optical film.

In a specific embodiment of the present application, the fingerprint identification module is attached to the bottom of the steel plate by bonding or welding, or the fingerprint identification module is attached to the bottom of the optical film through an optical glue; and/or
the under-screen fingerprint identification apparatus further includes a reinforcing plate, and the fingerprint identification module is disposed in the middle frame through the reinforcing plate, so that the fingerprint identification module is attached to the bottom of the steel plate or the optical film.

In a specific embodiment of the present application, a bottom plate of the middle frame is further provided with a third opening for accommodating the fingerprint identification module, so that the fingerprint identification module passes through the third opening and is attached to the bottom of the steel plate or the optical film.

In a specific embodiment of the present application, the liquid crystal display screen includes a liquid crystal panel and the protective cover located on the liquid crystal panel, and at least part of the detection light source is located under an edge area of the protective cover and at one side of the backlight module.

In a specific embodiment of the present application, the protective cover is provided with an accommodation space at a position opposite to the detection light source, so that at least part of the detection light source is located in the accommodation space and is attached to the protective cover.

In a specific embodiment of the present application, a quantity of the detection light source is two or more, the two or more detection light sources are arranged in parallel on a substrate, and are bonded or welded to a lower surface of the protective cover through the substrate.

In a specific embodiment of the present application, the detection light sources are symmetrically distributed on two sides of the fingerprint identification module, and a vertical distance between the detection light source and a center of the fingerprint identification module is less than or equal to 20 mm.

In a specific embodiment of the present application, the detection light source is attached to the bottom plate of the middle frame and is located under the backlight module, and the detection light source is located at a periphery of the fingerprint identification module, where the steel plate and the middle frame are respectively provided with a fourth opening and a fifth opening at positions opposite to the detection light source, so that the probe light emitted from the detection light source can pass through the middle frame and the steel plate and irradiate the finger above the fingerprint detection area.

In a specific embodiment of the present application, the fifth opening is communicated with the third opening or the first opening, or, the fifth opening and the third opening or the first opening, are two independent opening structures.

In a specific embodiment of the present application, the detection light source is attached to the steel plate and located under the optical film, and the detection light source is located at a periphery of the fingerprint identification module, where the steel plate is provided with a fourth opening at a position opposite to the detection light source, so that the probe light emitted from the detection light source can pass through the steel plate and irradiate the finger above the fingerprint detection area.

In a specific embodiment of the present application, a substrate configured to support the detection light source is further included, where the detection light source is attached to the middle frame or the steel plate through the substrate.

In a specific embodiment of the present application, the detection light source is symmetrically distributed at the periphery of the fingerprint identification module, and a vertical distance between the detection light source and a center of the fingerprint identification module is less than or equal to 15 mm.

In a specific embodiment of the present application, the detection light source and the fingerprint identification module are of a split structure, or, the detection light source and the fingerprint identification module are of an integrated structure.

In a specific embodiment of the present application, the detection light source and the fingerprint identification module are attached to a lower side of the steel plate or the optical film through a fixing member.

In a specific embodiment of the present application, the fingerprint identification module includes a filter and a fingerprint sensor, and the filter is disposed above the fingerprint sensor and configured to filter out other infrared light or interference light than a waveband of the fingerprint detection light, and the fingerprint sensor includes an optical sensing array with a plurality of optical sensing units configured to receive fingerprint detection light that passes through the filter to obtain the fingerprint image of the finger.

In a specific embodiment of the present application, the fingerprint sensor is carried above a reinforcing plate, and is connected to a flexible circuit board above the reinforcing plate through a metal lead, where the flexible circuit board is hollowed out or slotted in an area of the fingerprint sensor to provide an avoidance space that accommodates the fingerprint sensor.

In a specific embodiment of the present application, the fingerprint sensor further includes an optical path guiding structure formed above the optical sensing array by a semiconductor process, the optical path guiding structure includes a micro-lens array and a plurality of light blocking layers located between the micro-lens array and the optical sensing array, the plurality of light blocking layers respectively define a plurality of optical transmission paths between the micro-lens array and the optical sensing array through apertures, and each micro-lens of the micro-lens array is configured to respectively focus the fingerprint detection light to a transmission optical path corresponding to the micro-lens, and the fingerprint detection light is transmitted to a corresponding optical sensing unit through the transmission optical path.

In a specific embodiment of the present application, the filter is directly formed above the optical sensing array or the optical path guiding structure of the fingerprint sensor by coating.

In a specific embodiment of the present application, the fingerprint identification module further includes a microscopic lens having at least one spherical or aspheric lens and a physical component configured to carry the microscopic lens, where the physical component includes a lens barrel or a lens holder, which is disposed above a flexible circuit board and forms an enclosed space with the flexible circuit board, where the fingerprint sensor and the filter above the fingerprint sensor are disposable in the enclosed space, and are located in a convergent optical path of the microscopic lens to implement fingerprint optical imaging.

In a second aspect, the present application provides a liquid crystal display fingerprint identification system, applied to an electronic device with a middle frame, including: a liquid crystal display screen, and an under-screen fingerprint identification apparatus according to any one of the foregoing, where the under-screen fingerprint identification apparatus is located under the liquid crystal display screen, and a fingerprint detection area of the under-screen fingerprint identification apparatus is at least partially located in a display area of the liquid crystal display screen.

In a specific embodiment of the present application, the under-screen fingerprint identification apparatus includes a detection light source and a fingerprint identification module located under the liquid crystal display screen; and the detection light source is configured to be disposed under a protective cover or a backlight module of the liquid crystal display screen.

In a specific embodiment of the present application, the liquid crystal display screen includes a liquid crystal panel and the protective cover located on the liquid crystal panel, and at least part of the detection light source is located under an edge area of the protective cover and on one side of the backlight module.

In a specific embodiment of the present application, the protective cover is provided with an accommodation space at a position opposite to the detection light, so that at least part of the detection light source is located in the accommodation space and is attached to the protective cover.

In a specific embodiment of the present application, an inner wall of the accommodation space is provided with a shielding layer, and the shielding layer is made of a material transparent to the probe light and/or the fingerprint detection light.

In a specific embodiment of the present application, the shielding layer extends to other non-display area of the protective cover to cover a lower surface of the non-display area; and
the probe light and/or the fingerprint detection light is infrared light, and the shielding layer is an infrared transparent ink.

In a specific embodiment of the present application, an under-screen buffer area is provided between the liquid crystal display screen and the middle frame configured to support the liquid crystal display screen, and the under-screen buffer area is filled with a buffer material.

In a third aspect, the present application provides an electronic device, including: a middle frame and a liquid crystal display screen fingerprint identification system according to any one of the foregoing.

In the under-screen fingerprint identification apparatus, the LCD fingerprint identification system and the electronic device provided in the present application, at least part of the under-screen fingerprint identification apparatus is disposed under the liquid crystal display screen, the probe light is emitted from the detection light source, and the probe light irradiates a finger above the fingerprint detection to form the fingerprint detection light carrying fingerprint information, and then the fingerprint identification module located under the liquid crystal display screen further receives the fingerprint detection light that passes through the liquid crystal display screen to obtain a fingerprint image of the finger, so as to implement under-screen fingerprint identification of an electronic device using an LCD screen, and then, solve a problem that an electronic product in the prior art does not use the LCD screen to realize a function of under-screen fingerprint identification, and fill a blank that there's no existing electronic product using an LCD screen to implement under-screen fingerprint identification.

### BRIEF DESCRIPTION OF DRAWINGS

In order to more clearly explain the technical solutions in embodiments of the present application or the prior art, the following briefly introduces accompanying drawings that need to be used in description of the embodiments or the prior art. Obviously, the accompanying drawings in the following description are some embodiments of the present application. For persons of ordinary skill in the art, other drawings may also be obtained based on these drawings without creative efforts.
FIG. 1 is a partial exploded schematic diagram of a mobile phone equipped with an under-screen fingerprint identification apparatus according to an embodiment of the present application;
FIG. 2 is a schematic structural diagram of a first mobile phone equipped with an under-screen fingerprint identification apparatus according to an embodiment of the present application;
FIG. 3 is a schematic structural diagram of a second mobile phone equipped with an under-screen fingerprint identification apparatus according to an embodiment of the present application;
FIG. 4 is a partial schematic structural diagram of a mobile phone equipped with an under-screen fingerprint identification apparatus according to an embodiment of the present application;
FIG. 5 is a schematic structural diagram of a third mobile phone equipped with an under-screen fingerprint identification apparatus according to an embodiment of the present application;
FIG. 6 is a schematic structural diagram of a fourth mobile phone equipped with an under-screen fingerprint identification apparatus according to an embodiment of the present application; and
FIG. 7 is a schematic structural diagram of a fifth mobile phone equipped with an under-screen fingerprint identification apparatus according to an embodiment of the present application.

### Description of reference signs:

mobile phone-100; liquid crystal display screen-10; display module-11; protective cover-111; display area-112; non-display area-113; backlight module-12; optical film-121; steel plate-122; second opening-1221; fourth opening-1222; shielding layer-13; under-screen fingerprint identification apparatus-20; detection light source-21; fingerprint identification module-22; fingerprint sensor-221; filter-222; optical element-223; bonding layer-224; reinforcing plate-23; substrate-24; fixing member-25; middle frame-30; first opening-31; third opening-32; fifth opening-33; frame-34; bottom plate-35; mainboard -40; and under-screen buffer area-50.

### DESCRIPTION OF EMBODIMENTS

To describe the purpose, technical solutions and advantages of embodiments of the present application more clearly, the following clearly and completely describes the technical solutions in embodiments of the present application in conjunction with the accompanying drawings in the embodiments of the present application. Apparently, the embodiments in the description are part of embodiments of the present application, rather than all of the embodiments. Based on the embodiments of the present application, all other embodiments obtained by persons of ordinary skill in the art without creative efforts all belong to the protection scope of the present application.

The technical solutions of the present application will be described in detail below with reference to specific embodiments. The following specific embodiments may be combined with each other, and the same or similar concepts or processes may not be repeated in some embodiments.

At present, an optical under-screen fingerprint technology of a mobile phone with an OLED screen has entered a commercial era. A mobile phone with an OLED screen uses self-illumination of OLED screen pixels as a light source. Light irradiates a finger to form fingerprint detection light which returns and passes through the OLED screen, and is received by an optical fingerprint sensor under the screen, so as to implement fingerprint image collection and fingerprint identification. Due to high costs of OLED screen, the mobile phone using the OLED screen is also relatively expensive. An LCD screen has many advantages such as thin body, power saving, and no radiation, and is widely used in electronic products such as a television, a computer, and a mobile phone, etc. However, electronic products in the prior art do not use an LCD screen to realize a function of under-screen fingerprint identification.

To this end, the present application provides an under-screen fingerprint identification apparatus, a LCD fingerprint identification system and an electronic device, so as to realize optical fingerprint detection under the LCD screen.

The embodiments of the present application provide an under-screen fingerprint identification apparatus and a liquid crystal display screen fingerprint identification system applied to an electronic device. A terminal device may include, but is not limited to, an electronic product or component, such as a mobile phone, a tablet computer, a television, a laptop, a digital frame, a navigator, and a fingerprint lock, using a liquid crystal display screen. The terminal device includes a liquid crystal display screen, a middle frame, and an under-screen fingerprint identification apparatus or a liquid crystal display screen fingerprint identification system provided in the embodiments of the present application.

Hereinafter, an application scenario of a mobile phone using a liquid crystal display screen is taken as an example to further describe the under-screen fingerprint identification apparatus and the liquid crystal display screen fingerprint identification system of the present application.

### Embodiment 1

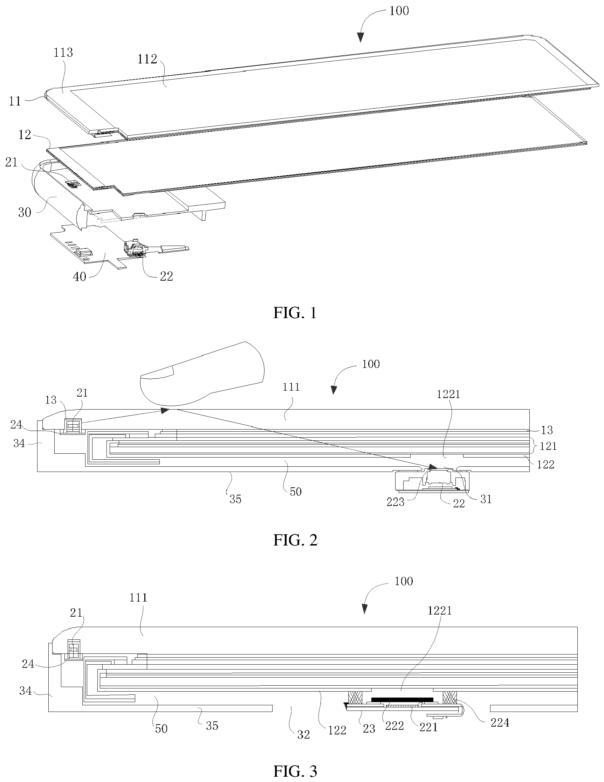

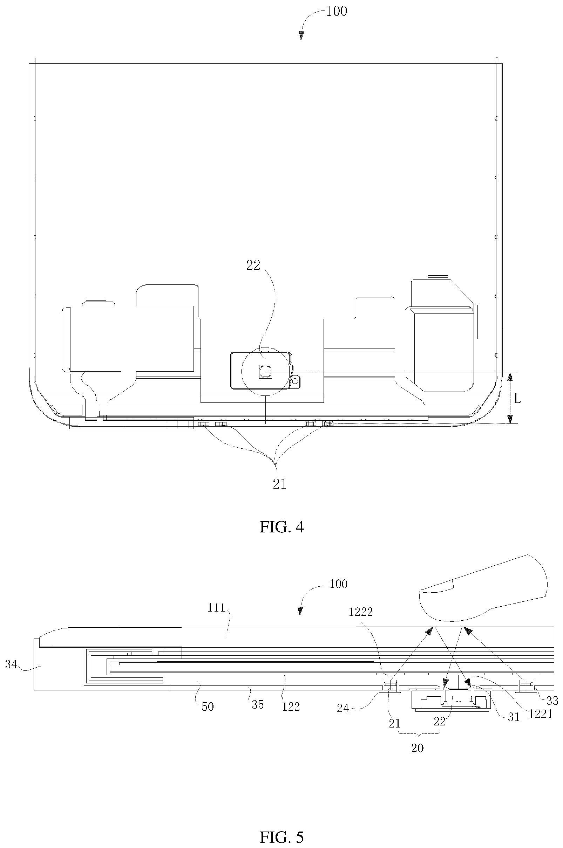

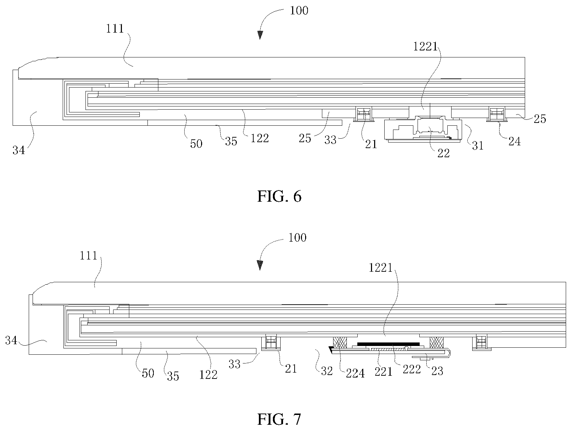

FIG. 1 is a partial exploded schematic diagram of a mobile phone equipped with an under-screen fingerprint identification apparatus according to an embodiment of the present application; FIG. 2 is a schematic structural diagram of a first mobile phone equipped with an under-screen fingerprint identification apparatus according to an embodiment of the present application; FIG. 3 is a schematic structural diagram of a second mobile phone equipped with an under-screen fingerprint identification apparatus according to an embodiment of the present application; FIG. 4 is a partial schematic structural diagram of a mobile phone equipped with an under-screen fingerprint identification apparatus according to an embodiment of the present application; FIG. 5 is a schematic structural diagram of a third mobile phone equipped with an under-screen fingerprint identification apparatus according to an embodiment of the present application; FIG. 6 is a schematic structural diagram of a fourth mobile phone equipped with an under-screen fingerprint identification apparatus according to an embodiment of the present application; and FIG. 7 is a schematic structural diagram of a fifth mobile phone equipped with an under-screen fingerprint identification apparatus according to an embodiment of the present application.

Referring to FIG. 1 to FIG. 7, an embodiment of the present application provides an under-screen fingerprint identification apparatus applied to a mobile phone 100 having a liquid crystal display screen 10 and a middle frame 30, where the middle frame 30 may be configured to accommodate and support the liquid crystal display screen 10, so that at least part of the liquid crystal display screen 10 is located in the middle frame 30. An under-screen fingerprint identification apparatus 20 is located under the liquid crystal display screen 10. A fingerprint detection area (not shown in the figure) of the under-screen fingerprint identification apparatus 20 is at least partially located in a display area 112 of the liquid crystal display screen 10. The under-screen fingerprint identification apparatus 20 includes a detection light source 21 and a fingerprint identification module 22 located under the liquid crystal display screen 10. The detection light source 21 is disposed under a protective cover plate 111 or a backlight module 12 of the liquid crystal display screen 10, and is configured to emit probe light to a fingerprint detection area of the display area 112 on the liquid crystal display screen 10. The probe light irradiates a finger above the fingerprint detection area to form fingerprint detection light carrying fingerprint information on the finger, where the fingerprint detection light may be formed by the probe light emitted from the detection light source 21 being reflected or scattered on the finger, and may also be formed by the probe light entering the finger and transmitting from the surface of the finger. The fingerprint identification module 22 is configured to receive fingerprint detection light that passes through the liquid crystal display screen 10 to obtain a fingerprint image of the finger.

It should be noted that, in the present embodiment, referring to FIG. 1 to FIG. 2, the mobile phone 100 may include the liquid crystal display screen 10 and a back cover (not shown in the figure). The middle frame 30 is mounted between the liquid crystal display screen 10 and the back cover, and the liquid crystal display screen 10 is located inside the middle frame 30. Specifically, other components inside the mobile phone 100, such as a mainboard 40 and a battery (not shown in the figure) of the mobile phone 100, may be mounted on the middle frame 30. Specifically, a connecting manner of the middle frame 30 to the liquid crystal display screen 10 and the back cover may be clamping, bonding, or connecting through a fastener. In the present embodiment, the middle frame 30 may include a bottom plate 35 and a frame 34 located at an edge of the bottom plate 35. The frame 34 may extend vertically from the edge of the bottom plate 35 to form a plurality of side walls, and the plurality of side walls cooperate with the bottom plate 35 to form an accommodation space for accommodating and supporting the liquid crystal display screen 10. It should be noted that, the inside of the middle frame 30 in the present embodiment may be an internal space enclosed by the frame 34 and the bottom plate 35 of the middle frame 30, that is, the afore-mentioned accommodation space.

Specifically, in the present embodiment, referring to FIG. 1, the display area 112 of the liquid crystal display screen 10 is an area configured to display an image on the liquid crystal display screen 10 or the mobile phone 100. The fingerprint detection area of the under-screen fingerprint identification apparatus 20 is at least partially located in the display area 112 of the liquid crystal display screen 10, and thus, on the basis of implementing under-screen fingerprint identification, area of the display area 112 on the liquid crystal display screen 10 is enlarged, thereby obtaining a better user experience. The fingerprint detection area may specifically be an area for a user to press a finger to implement a fingerprint input operation.

In the present embodiment, the under-screen fingerprint identification apparatus 20 includes a detection light source 21 and a fingerprint identification module 22 located under the liquid crystal display screen 10. That is to say, a setting position of the detecting light source 21 only needs to satisfy that the detection light source 21 can emit probe light to a finger above the liquid crystal display screen 10 and forms the fingerprint detection light carrying fingerprint information on the finger above the liquid crystal display screen 10, and the fingerprint detection light passes through the liquid crystal display screen 10 and returns to the fingerprint identification module 22.

Correspondingly, the fingerprint identification module 22 is located under the liquid crystal display screen 10, and may be located at least partially under the liquid crystal display screen 10. That is to say, the fingerprint identification module 22 may be completely located under the liquid crystal display screen 10; or main functional components of the fingerprint identification module 22 are located under the liquid crystal display screen 10, and the fingerprint identification module 22 may also have some functional components disposed within the liquid crystal display screen 10 or at other positions. In the present embodiment, a specific setting position of the fingerprint identification module 22 is not further limited, and a setting manner of the fingerprint identification module 22 only needs to be able to obtain a fingerprint image of a finger, thereby performing fingerprint identification or fingerprint detection. In the present embodiment, on the basis of implementing fingerprint identification under the liquid crystal display screen, the setting of the under-screen fingerprint identification apparatus 20 is more diversified.

In the present embodiment, at least part of the under-screen fingerprint identification apparatus 20 is disposed under the liquid crystal display screen 10. Probe light is emitted from the detection light source 21 and irradiates a finger above the fingerprint detection area of the liquid crystal display screen 10 to form the fingerprint detection light carrying fingerprint information. The fingerprint identification module 22 located under the liquid crystal display screen 10 further receives the fingerprint detection light that passes through the liquid crystal display screen 10 to obtain the fingerprint image of the finger, so as to implement the under-screen fingerprint identification of an electronic device using an LCD screen, and then, solve a problem that an electronic product in the prior art does not use the LCD screen to realize a function of under-screen fingerprint identification, and fill a blank that there's no existing electronic product using an LCD screen to implement under-screen fingerprint identification.

The liquid crystal display screen 10 generally includes a backlight module 12 located under a display module 11, where the fingerprint identification module 22 may be disposed under the backlight module 12. To ensure the probe light emitted from the detection light source 21 and the fingerprint detection light formed by the probe light irradiating the finger can pass through the liquid crystal display screen 10, the backlight module 12 is provided with a light-transmitting area configured to allow the fingerprint detection light to pass through. The light-transmitting area may refer to an area which is light-transmitting for a waveband of the fingerprint detection light and is formed by a relevant optical film of the backlight module 12 in a transmission path of the probe light and the fingerprint detection light, so that the fingerprint detection light is transmitted to the fingerprint identification module 22 through the backlight module 12.

Specifically, in the present embodiment, the light-transmitting area may be an area corresponding to a transmission path of the fingerprint detection light, or the probe light and the fingerprint detection light, in the liquid crystal display screen 10, and a transmission waveband of the probe light covers a reflection waveband of the probe light, so that the probe light and the fingerprint detection light formed by the probe light on the finger may penetrate the light-transmitting area of the backlight module 12.

In order to avoid interference caused by the probe light emitted from the detection light source 21 on a display effect of the liquid crystal display screen 10, in the present embodiment, the probe light or the fingerprint detection light has a different wavelength from backlight provided by the backlight module 12 for displaying an image, that is to say, a waveband of the probe light or the fingerprint detection light is different from a backlight waveband. Therefore, the fingerprint identification module 22 in the embodiment of the present application not only can use the fingerprint detection light that pass through the backlight module 12 to implement under-screen optical fingerprint detection, but also can reduce the interference caused by the probe light emitted from the detection light source 21 on the display effect of the liquid crystal display screen 10, and avoid affecting a display effect of images.

Among them, in the present embodiment, the backlight provided by the backlight module 12 is visible light, and the probe light and/or the fingerprint detection light may be infrared light or other light signals with a wavelength outside a visible light waveband and capable of realizing fingerprint identification, so that a user cannot see or perceive the probe light for fingerprint identification from the liquid crystal display screen 10. In the present embodiment, the probe light and/or the fingerprint detection light may include, but is not limited to, infrared light.

In a specific embodiment, referring to FIG. 1 to FIG 4, the detection light source 21 may be located under an edge non-display area of the liquid crystal display screen 10 (for example, located under the protective cover 111 of the display module 11); and the fingerprint identification module 22 is disposed under the display area 112 of the liquid crystal display screen 10 (for example, located under the backlight module 12). Or, referring to FIG. 5 to FIG. 7, the detection light source 21 and the fingerprint identification module 22 are both located under the display area 112 of the liquid crystal display screen 10 (for example, both located under the backlight module 12).

It should be understood that, a non-display area 113 on the liquid crystal display screen 10 is an area on the liquid crystal display screen 10 that does not display or has no display functions, such as a chin area.

In order to realize a fixation of the fingerprint identification module 22, as a possible implementation, referring to FIG. 2 and FIG. 5, the fingerprint identification module 22 may be bonded, screw locked or welded to the bottom plate 35 of the middle frame 30. In order to facilitate the fingerprint detection light that passes through the backlight module 12 to pass through the bottom plate 35 of the middle frame 30 and enter the fingerprint identification module 22, the bottom plate 35 of the middle frame 30 is provided with a first opening 31 in an area opposite to the fingerprint identification module 22. The first opening 31 is configured to allow the fingerprint detection light that passes through the backlight module 12 to pass through the middle frame 30 and be transmitted to the fingerprint identification module 22.

Specifically, the fingerprint identification module 22 may be integrally attached to a lower surface of the bottom plate 35 of the middle frame 30 and located under a peripheral area of the first opening 31. When the bottom plate 35 of the middle frame 30 has a certain thickness, the fingerprint identification module 22 may be partially accommodated in the first opening 31, so that the fingerprint identification module 22 is completely located under the liquid crystal display screen 10. In the present embodiment, a setting manner of the fingerprint identification module 22 is not further limited, as long as it is satisfied that the fingerprint detection light can enter the fingerprint identification module 22 through the first opening 31.

The opening shape and size of the first opening 31 can satisfy that the fingerprint detection light can substantially pass through, so as to avoid that the fingerprint detection light cannot normally pass through the middle frame 30 and thus acquisition of a fingerprint image is influenced. In the present embodiment, the size of the first opening 31 is based on a receiving optical path of the fingerprint identification module 22.

Referring to FIG. 3 and FIG.7, in the present embodiment, the fingerprint identification module 22 may include a filter 222 and a fingerprint sensor 221, where the filter 222 faces a side of the backlight module 12 and is located above the fingerprint sensor 221, and is configured to filter out other infrared light or interference light than the waveband of the fingerprint detection light, so as to eliminate the interference with fingerprint identification caused by the above light entering the fingerprint sensor 221, thereby improving the effect of fingerprint identification. Illustratively, in the present embodiment, the filter 222 includes but is not limited to an infrared cut filter (IR-Cut Filter, IRCF for short). The fingerprint sensor 221 may also be referred to as an optical sensor, an image sensor, an optical fingerprint sensor, an optical sensor, a fingerprint detection sensor, or the like, which may specifically include an optical imaging chip, or an optical imaging chip with a certain optical stack, which has an optical sensing array with a plurality of optical sensing units for receiving the fingerprint detection light and performing a photoelectric conversion of the fingerprint detection light.

Specifically, the fingerprint sensor 221 may be carried above a reinforcing plate 23 and connected to a flexible circuit board above the reinforcing plate 23 through a metal lead, where the flexible circuit board may be hollowed out or slotted in an area of the fingerprint sensor 221 to provide an avoidance space that accommodates the fingerprint sensor 221. The fingerprint sensor 221 may include an optical sensing array with a plurality of optical sensing units and an optical path guiding structure formed above the optical sensing array by a semiconductor process. The optical path guiding structure may include a micro-lens array and a plurality of light blocking layers located between the micro-lens array and the optical sensing array. The plurality of light blocking layers respectively define a plurality of transmission optical paths between the micro-lens array and the optical sensing array through apertures. Each micro-lens of the micro-lens array may focus the fingerprint detection light to a transmission optical path corresponding to the micro-lens, and the fingerprint detection light is transmitted to a corresponding optical sensing unit through the transmission light path. The filter 222 may be attached to the flexible circuit board and located above the fingerprint sensor 221, or may be directly formed above the optical sensing array or the optical path guiding structure of the fingerprint sensor 221 by coating.

Or, as an alternative solution, on the basis of the above, referring to FIG. 2, FIG.5 and FIG.6, the fingerprint identification module 22 may further include an optical element 223, where the filter 222 is located between the optical element 223 and the fingerprint sensor 221. The optical element 223 faces a side of the backlight module 12. The optical element 223 is configured to enable the fingerprint detection light that passes through the backlight module 12 to be guided along an optical path of the optical element 223 or optically concentrated by the optical element 223, and enter the fingerprint sensor 221, so as to implement optical imaging of a fingerprint image. The optical element 223 may include a microscopic lens having at least one spherical or aspheric lens and a physical component configured to carry the microscopic lens. The physical component may include a lens barrel or a lens holder, which is disposed above the flexible circuit board and forms an enclosed space with the flexible circuit board. The fingerprint sensor 221 and the filter 222 above the fingerprint sensor 221 may be disposed in the enclosed space, and located in a convergent optical path of the microscopic lens to implement fingerprint optical imaging.

Referring to FIG. 2 and FIG.5, the backlight module 12 includes an optical film 121 configured to allow the fingerprint detection light to pass through, and a steel plate 122 configured to support the optical film 121. The fingerprint identification module 22 is disposed under the steel plate 122, and the steel plate 122 is provided with a second opening in an area corresponding to the fingerprint identification module 22. The second opening 1221 is configured to allow the fingerprint detection light that passes through the optical film 121 to pass through the steel plate 122 and be transmitted to the fingerprint identification module 22. The second opening 1221 forms a light-transmitting area. Therefore, opening shape and size of the second opening 1221 can satisfy that the fingerprint detection light can pass through, so as to avoid that the fingerprint detection light cannot normally pass through the steel plate 122 and thus the acquisition of the fingerprint image is influenced. In the present embodiment, the size of the second opening 1221 is based on a receiving light path of the fingerprint identification module 22.

As another possible implementation, referring to FIG. 3, FIG. 6 and FIG. 7, the fingerprint identification module 22 may be attached to the bottom of the steel plate 122 by bonding, screw locking or welding, so that the fingerprint identification module 22 is located under the liquid crystal display screen 10, or the fingerprint identification module 22 may be attached to bottom of the optical film 121 by an optical glue, so that the fingerprint identification module 22 is partially located under the liquid crystal display screen 10.

Or, the under-screen fingerprint identification apparatus 20 further includes a reinforcing plate 23, and the fingerprint identification module 22 is disposed in the middle frame 30 through the reinforcing plate 23, so that the fingerprint identification module 22 is attached to the bottom of the steel plate 122 or the optical film 121. The fingerprint identification module 22 is supported and fixed to a certain extent by the reinforcement plate 23.

It should be understood that, in the present embodiment, the reinforcing plate 23 is adopted to attach the fingerprint identification module 22 to the bottom of the steel plate 122 or the optical film 121, and the fingerprint identification module 22 is attached to the bottom of the steel plate 122 or the optical film 121 by adjusting a distance between the reinforcing plate 23 and the backlight module 12. On this basis, the fingerprint identification module 22 may also be attached to the bottom of the steel plate 122 by bonding or welding, or the fingerprint identification module 22 may be attached to the bottom of the optical film 121 by an optical glue, so as to further fix the fingerprint identification module 22. In the present embodiment, the reinforcing plate 23 includes but is not limited to a reinforcing steel plate.

Specifically, in order to prevent an overall thickness of the mobile phone 100 equipped with the under-screen fingerprint identification apparatus 20 from being too large, referring to FIG. 3, FIG. 6 and FIG. 7, when the fingerprint identification module 22 is attached to the bottom of the steel plate 122 or the optical film 121, the fingerprint identification module 22 may be attached to the bottom of the steel plate 122 or the optical film 121 directly, or attached to the bottom of the steel plate 122 or the optical film 121 by a fixing member 25, and the filter 222 is caused to face the side of the backlight module 12, so as to eliminate an interference with fingerprint identification caused by light of other wavebands than the fingerprint detection light entering the fingerprint sensor 221, thereby improving the effect of fingerprint identification. In this case, the fingerprint identification module 22 may realize a distance between the fingerprint sensor 221 and the steel plate 122 in the backlight module 12 by adjusting a thickness of a bonding layer 224 or a solder, where the bonding layer 224 may be formed using an adhesive, such as a double-sided glue. Correspondingly, the fingerprint identification module 22 may adjust a distance between the fingerprint sensor 221 and the optical film 121 in the backlight module 12 by adjusting a thickness of the optical glue.

Specifically, in the present embodiment, the optical glue may be any optical liquid glue or optical solid glue. In the present embodiment, an optical transmittance of the optical glue and the bottom of the optical film 121 are the same or similar. Therefore, a transmitted proportion of the fingerprint detection light source 21 may be increased as much as possible, so that more fingerprint detection light sources 21 enter the fingerprint identification module 22.

It should be noted that, referring to FIG. 3 and FIG. 7, when the fingerprint identification module 22 is directly attached to the bottom of the optical film 121 through the optical glue, part of the fingerprint identification module 22 may be located in the second opening 1221, so that part of the fingerprint identification module 22 can be located under the backlight module 12.

Further, in order to improve the effect of fingerprint identification, in the present embodiment, a distance between the fingerprint sensor 221 and a lower surface of the backlight module 12 is 150um-3000um, enabling the overall thickness of the mobile phone 100 being not too large on a basis of realizing a better effect of fingerprint identification. Therefore, in the present embodiment, the distance between the fingerprint sensor 221 and the lower surface of the backlight module 12 (i.e. a lower surface of the steel plate 122) is limited to the above range. In a practical application, according to a different application scenario of the under-screen fingerprint identification apparatus 20, that is, with a different electronic device, the distance between the fingerprint sensor 221 and the lower surface of the backlight module 12 would also change. In the present embodiment, the distance between the fingerprint sensor 221 and the lower surface of the backlight module 12 is not further limited.

Specifically, the backlight module 12 is disposed under a liquid crystal panel (not marked in the figure) for providing a backlight source for the liquid crystal panel. The backlight module 12 includes a backlight light source (not marked in the figure). The visible light emitted from the backlight light source is converted into a uniform ground light source through the optical film 121 and irradiates the liquid crystal panel so as to display an image.

It should be noted that, in the present embodiment, the optical film 121 may include a reflective film, a light guide plate, a brightness enhancement film, a light uniform film, etc. The optical film 121 may be formed with a light-transmitting area in a transmission optical path of the probe light and the fingerprint detection light. The light-transmitting area may be an area with different optical characteristics for visible light and infrared light, so that the optical film 121 performs normal optical processing on the visible light provided by the backlight light source to provide a uniform surface light source for a display module 11, and at the same time the infrared light used for the probe light and the fingerprint detection light would not be affected, so that the probe light and the fingerprint detection light can normally penetrate the optical film 121 and enter the fingerprint identification module 22.

Further, referring to FIG. 3 and FIG. 7, the bottom plate 35 of the middle frame 30 may also be provided with a third opening 32 configured to accommodate the fingerprint identification module 22. The third opening 32 provides an avoidance space for the fingerprint identification module 22 and the fingerprint identification module 22 passes through the third opening 32 and is attached to the bottom of the steel plate 122 or the optical film 121. In the present embodiment, shape and size of the third opening 32 are not further limited. In the present embodiment, the shape and size of the third opening 32 may at least accommodate the fingerprint identification module 22. It should be understood that, in the present embodiment, an opening size of the third opening 32 should be larger than that of the first opening 31, so that the fingerprint identification module passes through the third opening 32 and is attached to the bottom of the steel plate 122 or the optical film 121.

In the present embodiment, the detection light source 21 may be disposed under the protective cover 111 of the liquid crystal display screen 10, and may have a split structure with the fingerprint identification module 22 (that is, two independent structures). Or, the detection light source 21 may also be disposed at a periphery of the fingerprint identification module 22 and is attached to the middle frame 30 or the steel plate 122.

Several possible setting manners of the detection light source 21 are further explained below.

As a first possible implementation, referring to FIG. 2 and FIG. 3, the display module 11 of the liquid crystal display screen 10 may include a liquid crystal panel and a protective cover 111 on the liquid crystal panel. The detection light source 21 may be located under an edge area of the protective cover 11 and at one side of the liquid crystal panel and the backlight module 12. In this case, the fingerprint identification module 22 may be attached to the bottom plate 35 of the middle frame 30, the steel plate 122 or the optical film 121. The fingerprint identification module 22 and the detection light source 21 are of a split structure, which, compared with the fingerprint identification module 22 and the detection light source 21 being of an integrated structure, can reduce an overall structural size of the under-screen fingerprint identification apparatus 20, so that a mounting manner of the fingerprint identification module 22 and/or the detection light source 21 is more flexible and diversified. In addition, the detection light source 21 is disposed under the edge area of the protective cover 111, which can emit probe light to a finger above the liquid crystal display screen 10 in a side lighting manner. On the one hand, the probe light would not be attenuated and affected by the liquid crystal panel and the backlight module, which can enhance the fingerprint detection light formed on the finger. On the other hand, the probe light can enter the finger through an oblique angle and be transmitted from the surface of the finger to form fingerprint detection light, which improves fingerprint information carried by the fingerprint detection light.

Illustratively, referring to FIG. 2 and FIG. 3, the protective cover 111 may have an edge extension portion opposite to the backlight module 12. The edge extension portion may correspond to a chin area of the mobile phone 100, which may be used as a wiring area of the liquid crystal panel, and the detection light source 21 may be disposed under the edge extension portion (i.e. an edge area) of the protective cover 111, and is disposed in parallel with the liquid crystal panel and the backlight module 12 (that is, not overlapping each other) and located on one side of the liquid crystal panel and the backlight module 12. Or, the detection light source 21 may also be set in other positions, only to ensure that the probe light emitted from the detection light source 21 can irradiate a finger above the fingerprint detection area, and the fingerprint detection light formed by a reflection or transmission of the finger can pass through the light-transmitting area of the backlight module 12 and enter the fingerprint identification module 22.

Specifically, the liquid crystal panel may be a touch liquid crystal panel with a touch detection function. The protective cover 111 is disposed above the liquid crystal panel for protecting the liquid crystal panel and providing a user with a finger-operated human-machine interaction interface.

It should be noted that, in a practical application, a relative position among the detection light source 21, the light-transmitting area of the backlight module 12, and the fingerprint identification module 22 may be adjusted as needed, but the adjusted relative position among the detection light source 21, the light-transmitting area of the backlight module 12 and the fingerprint identification module 22 needs to satisfy that the probe light emitted from the detection light source 21 can irradiate a finger above the fingerprint detection area, and the fingerprint detection light formed by a reflection or transmission of the finger can pass through the light-transmitting area of the backlight module 12 and enter the fingerprint identification module 22.

Specifically, referring to FIG. 2 and FIG. 3, the protective cover 111 is provided with an accommodation space (not marked in the figure) at a position opposite to the detection light source 21, so that at least part of the detection light source 21 is located in the accommodation space and is attached to the cover plate 111.

Illustratively, referring to FIG. 2, the accommodation space may be a blind hole or other structures capable of accommodating the detecting light source 21 that is opened in the protective cover 111 at a position opposite to the detection light source 21. In this case, the detection light source 21 is disposed close to the frame 34 of the middle frame 30, and the middle frame 30 may be provided with an avoidance space configured to avoid the detection light source 21, where a depth of the blind hole is less than 0.8 mm, so that at least part of the detection light source 21 is located in the accommodation space and is attached to the protective cover 111. By disposing the detection light source 21 in the accommodation space, on the one hand, a vertical distance between the detection light source 21 and the finger on the fingerprint detection area can be shortened, so as to reduce a loss of probe light in transmission and improve intensity of the probe light; on the one hand, an overall structure of the mobile phone 100 may be avoid from being too thick due to a setting of the detection light source 21.

Specifically, referring to FIG. 2 to FIG. 4, a quantity of the detection light source 21 is two or more, the detection light sources 21 are arranged in parallel on the substrate 24, and the detection light sources 21 are bonded or welded, through the substrate 24, to a lower surface of the edge extension portion of the protective cover plate 111 located at a peripheral area of the blind hole. Referring to FIG. 4, in order to improve the effect of fingerprint identification, a plurality of detection light sources 21 can be symmetrically distributed on two sides of the fingerprint identification module 22, and a vertical distance L between a group of detection light source 21 and a center of the fingerprint identification module 22 is less than or equal to 20 mm. Illustratively, the quantity of the detection light source 21 includes but is not limited to four. Two detection light sources 21 form a group and are distributed on two sides of the fingerprint identification module 22.

Specifically, the detection light source 21 may be an infrared light source, and the probe light emitted by the detection light source 21 is infrared light. Therefore, the fingerprint detection light formed by the probe light irradiating a finger and reflected on or transmitted from the finger is also infrared light. Illustratively, the detection light source 21 may be an infrared light source such as an infrared lamp, an infrared vertical cavity surface emitting laser (Vertical Cavity Surface Emitting Laser, VCSEL for short), an infrared laser diode (Laser Diode), etc. In the present embodiment, type of the detection light source 21 is not further limited.

It should be noted that, in the present embodiment, the infrared light emitted from the detection light source 21 is used as the probe light. Since a penetrating ability of the infrared light is stronger than the visible light, a signal of the fingerprint detection light passing through the liquid crystal display screen 10 and the backlight module 12 can be enhanced more effectively, thereby improving the effect of fingerprint identification.

As a second possible implementation, referring to FIG. 5, the detection light source 21 is attached to the bottom plate 35 of the middle frame 30 and located under the backlight module 12. The detection light source 21 is located at a periphery of the fingerprint identification module 22. In this case, the detection light source 21 may be partially located in the middle frame 30, and the fingerprint identification module 22 may be attached to the bottom plate 35 of the middle frame 30, or the fingerprint identification module 22 may be attached to a lower surface of the steel plate 122 or the optical film 121. The steel plate 122 and the middle frame 30 are respectively provided with a fourth opening 1222 and a fifth opening 1223 at positions opposite to the detection light source 21, and the detection light source 21 is disposed at the fifth opening, so that the probe light emitted from the detection light source 21 can pass through the middle frame 30 and the steel plate 122and irradiate a finger above the fingerprint detection area. Or, the detection light source 21 is attached to an upper surface of the bottom plate 35 of the middle frame 30 and is located under the backlight module 12. In this case, the detection light source 21 is completely located in the middle frame 30. The steel plate 122 is provided with a fourth opening 1222 at a position opposite to the detection light source 21, so that the probe light emitted from the detection light source 21 can pass through the middle frame 30 and the steel plate 122 and irradiate on a finger of the fingerprint detection area. In the present embodiment, opening shape and size of the fourth opening 1222 and the fifth opening 33 may satisfy that the fingerprint detection light can pass through, so as not to affect the probe light passing through the middle frame 30 and the backlight module 12 to irradiate on the finger above the fingerprint detection area.

Specifically, referring to FIG. 5 to FIG. 7, the fifth opening 33 may be communicated with the third opening 32 or the first opening 31 (i.e. the fifth opening 33 and the third opening 32 or the first opening 31 form one opening structure), or the fifth opening 33 and the third opening 32 or the first opening 31 are two independent opening structures.

As a third possible implementation, referring to FIG. 6 and FIG. 7, the detection light source 21 is attached to the steel plate 122 and is located under the optical film 121. The detection light source 21 is located at a periphery of the fingerprint identification module 22. In this case, the detection light source 21 may be completely located in the middle frame 30, and the fingerprint identification module 22 may be attached to the bottom of the steel plate 122 and the optical film 121. The steel plate 122 is provided with a fourth opening 1222 at a position opposite to the detection light source 21, so that the probe light emitted from the detection light source 21 can pass through the steel plate 122 and irradiate the finger in the fingerprint detection area.

Further, referring to FIG. 5 to FIG. 7, the under-screen fingerprint identification apparatus 20 also includes a substrate 24 configured to support the detection light source 21. The detection light source 21 is attached to the middle frame 30 or the steel plate 122 through the substrate 24, where a manner in which the substrate 24 is attached to the middle frame 30 or the steel plate 122 includes, but is not limited to, bonding or welding. Further, the substrate 24 may be attached to the steel plate 122 through a fixing member 25, so as to combine the detection light source 21 with the steel plate 122, where the fixing member 25 may be the substrate 24, a foam or a double-sided glue.

Further, in the second possible implementation and the third possible implementation of the detection light source 21, referring to FIG. 5 to FIG. 7, the detection light sources 21 are symmetrically distributed at a periphery (i.e. all around) of the fingerprint identification module 22, and a vertical distance between the detection light source 21 and a center of the fingerprint identification module 22 is less than or equal to 15 mm. Illustratively, the quantity of the detection light source 21 may be two or more than two.

Further, in the second possible implementation and the third possible implementation of the detection light source 21, the detection light source 21 and the fingerprint identification module 22 may be of a split structure, that is, the detection light source 21 and the fingerprint identification module 22 are two independent structures; or the detection light source 21 and the fingerprint identification module 22 may be of an integrated structure, that is, the detection light source 21 may share a circuit board with the fingerprint identification module 22 and be welded to the periphery of the fingerprint identification module 22 to form an integrated structure, where the circuit board of the fingerprint identification module 22 includes but is not limited to a flexible circuit board.

In the under-screen fingerprint identification apparatus provided in the present application, at least part of the detection light source is disposed in the middle frame for emitting probe light. The fingerprint identification module located under the liquid crystal display screen is configured to receive the fingerprint detection light passing through the liquid crystal display screen to obtain a fingerprint image of a finger, so as to implement under-screen fingerprint identification of an electronic device using an LCD screen, and fill a blank that there's no existing electronic product using an LCD screen to implement under-screen fingerprint identification.

### Embodiment 2

On the basis of the above embodiments, the present embodiment provides a liquid crystal display fingerprint identification system, applied to a mobile phone 100 or other electronic devices with a middle frame 30, including: a liquid crystal display screen 100 at least partly located in the middle frame 30, and the under-screen fingerprint identification apparatus 20 according to the foregoing embodiments. The under-screen fingerprint identification apparatus 20 is located under the liquid crystal display screen 10. A fingerprint detection area of the under-screen fingerprint identification apparatus 20 is at least partially located in a display area 112 of the liquid crystal display screen 10.

The under-screen fingerprint identification apparatus 20 includes a detection light source 21 and a fingerprint identification module 22 located under the liquid crystal display screen 10. The detection light source 21 is disposed under a protective cover 111 or a backlight module 12 of the liquid crystal display screen 10 and is configured to emit probe light. The probe light irradiates a finger above the fingerprint detection area to form fingerprint detection light carrying fingerprint information. The fingerprint identification module 22 is configured to receive the fingerprint detection light that passes through the liquid crystal display screen.

It should be noted that, the liquid crystal display screen 10 includes a display module 11, a backlight module 12 and an under-screen fingerprint identification apparatus 20, where the display module 11 includes a liquid crystal panel and a protective cover 111 on the liquid crystal panel, where the liquid crystal panel may be a touch liquid crystal panel with a touch detection function, and the protective cover 111 is disposed above the liquid crystal panel, and is configured to protect the liquid crystal panel and provide a user with a finger-operated human-machine interactive interface. The backlight module 12 is disposed under the liquid crystal panel and is configured to provide a backlight source for the liquid crystal panel. The backlight module 12 includes a backlight light source (not marked in the figure). The visible light emitted from the backlight light source is converted into a uniform ground light source through the optical film 121 and irradiates the liquid crystal panel so as to display an image. The backlight module 12 includes an optical film 121 and a steel plate 122 supporting the optical film 121. At least part of the detection light source 21 is located under an edge area of the protective cover 111 and on one side of the backlight module 12.

Specifically, in the present embodiment, for the under-screen fingerprint identification apparatus 20, reference may be made to the description of the under-screen fingerprint identification apparatus 20 in the foregoing embodiments. In the present embodiment, further details are not described.

Further, in the present embodiment, the protective cover 111 is provided with an accommodation space at a position opposite to the detection light source 21, so that at least part of the detection light source 21 is located in the accommodation space and is attached to the protective cover 111. An inner wall of the accommodation space is provided with a shielding layer 13 (not marked in the figure), so as to prevent a user from seeing the detection light source 21 visually through the liquid crystal display screen 10 and improve aesthetic appearance and user experience of the mobile phone 100. At the same time, in order to avoid affecting a transmitted proportion of the probe light due to a setting of the shielding layer 13, the shielding layer 13 is made of a transparent material to the probe light and/or the fingerprint detection light, so as to ensure that the probe light can pass through the liquid crystal display screen 10 and irradiate a finger above the fingerprint detection area, and the fingerprint detection light carrying fingerprint information reflected by the finger can pass through the liquid crystal display screen 10 and be received by the fingerprint identification module 22, to obtain the fingerprint information, thereby performing fingerprint identification or fingerprint detection. Correspondingly, in order to avoid other structures inside the mobile phone 100 being viewed visually through the liquid crystal display screen 10, such as the fingerprint detection module, a screen printing ink on a non-display area 113 of the liquid crystal display screen 10 may be used.

As an alternative manner, in order to avoid other structures inside the mobile phone 100 being viewed visually through the liquid crystal display screen 10, in the present embodiment, the shielding layer 13 may extend to other non-display area of the protective cover 111, so as to cover a lower surface of the non-display area of the liquid crystal display screen 10. The probe light and/or the fingerprint detection light may be infrared light. Correspondingly, the shielding layer 13 may be an infrared transparent ink or other materials that can allow the probe light and/or the fingerprint detection light to pass through and can be used for blocking. In the present embodiment, the shielding layer 13 is not further limited.

Further, in order to protect the liquid crystal display screen 10, referring to FIG. 2 to FIG. 7, an under-screen buffer area is provided between the liquid crystal display screen 10 and the middle frame 30, and the under-screen buffer area is filed with a buffer material. By filling a gap between the liquid crystal display screen 10 and the middle frame 30 with the buffer material, on the one hand, there's a certain buffer effect between the backlight module 12 of the liquid crystal display screen 10 and the middle frame 30, so as to protect the backlight module. On the other hand, by setting the under-screen buffer area, diffusion of the fingerprint detection light in the under-screen buffer area can be avoided, so that the fingerprint detection light can be concentrated and transmitted to the fingerprint identification module 22, thereby improving the effect of fingerprint identification. In addition, dust between the backlight module 12 and the middle frame 30 can be blocked, and a possibility of dust entering the fingerprint identification module 22 can be reduced.

In the under-screen fingerprint identification system provided in the present application, at least part of the detection light source is disposed in the middle frame for emitting probe light, at least part of the fingerprint identification module is located under the liquid crystal display screen to receive the fingerprint detection light that passes through the liquid crystal display screen, to obtain a fingerprint image of a finger, thereby implementing under-screen fingerprint identification of an electronic device using an LCD screen and filling a blank that there's no existing electronic product using an LCD screen to implement under-screen fingerprint identification.

In the description of the present application, it should be noted that, the terms "mounting", "linking" and "connecting" should be understood in a broad sense, for example, may be a fixed connection, or may be indirectly connected via an intermediate medium, and may be a connectivity inside two elements or an interaction relationship between two elements. For persons of ordinary skill in the art, the specific meaning of the above terms in the present application may be understood according to a specific situation.

In the description of the present application, it should be understood that, orientational or positional relationships indicated by the terms "upper", "lower", "front", "back", "vertical", "horizontal", "top", "bottom", "inner", and "outer" are based on orientational or positional relationships shown in the figures, which are only for convenience of description of the present application and simplifying description, instead of indicating or implying that the indicated apparatus or element must have a particular orientation, or be constructed and operated in a particular orientation, and therefore, should not to be construed as a limitation of the present application. In the description of the present application, the meaning of "a plurality of' is two or more, unless otherwise precisely specified.

The terms "first", "second", "third", "fourth", and the like (if any) in the description and claims of the present application and the described figures are used to distinguish similar objects, and need not be used to describe a specific order or a precedence order. It is to be understood that, data used in this way may be interchanged, where appropriate, so that the embodiments of the present application described herein may be implemented in an order other than those illustrated or described herein. Moreover, the terms "including" and "having" and any variation thereof, are intended to cover non-exclusive inclusion, for example, a process, a method, a system, a product or a device including a series of steps or units needs not be limited to those steps or units listed clearly, but may include other steps or units not listed clearly or inherent to these processes, methods, products or devices.

Finally, it should be noted that, the above embodiments are merely used for describing the technical solutions of the present application, and are not limited thereto. Although the present application is described in detail with reference to the foregoing embodiments, it should be understood by those skilled in the art that, the technical solutions described in the foregoing embodiments may still be modified, or equivalent replacements may be made to some or all of the technical features. However, these modifications or replacements do not depart from the scope of the technical solutions of the embodiments of the present application.

## Claims

1. An under-screen fingerprint identification apparatus, applied to an electronic device with a liquid crystal display screen, wherein the under-screen fingerprint identification apparatus is located under the liquid crystal display screen, and a fingerprint detection area of the under-screen fingerprint identification apparatus is at least partially located in a display area of the liquid crystal display screen;
the under-screen fingerprint identification apparatus comprises a detection light source and a fingerprint identification module located under the liquid crystal display screen; the detection light source is configured to be disposed under a protective cover or a backlight module of the liquid crystal display screen, to emit probe light to a finger above the liquid crystal display screen; the probe light irradiates the finger above the fingerprint detection area to form fingerprint detection light carrying fingerprint information, and the fingerprint identification module is configured to receive the fingerprint detection light that passes through the liquid crystal display screen to obtain a fingerprint image of the finger.

2. The under-screen fingerprint identification apparatus according to claim 1, wherein the liquid crystal display screen comprises a backlight module, the fingerprint identification module is located under the backlight module, and the backlight module is formed with a light-transmitting area configured to allow the fingerprint detection light to pass through, so that the fingerprint detection light passes through the backlight module and is transmitted to the fingerprint identification module.

3. The under-screen fingerprint identification apparatus according to claim 2, wherein the probe light and/or the fingerprint detection light is infrared light, and backlight provided by the backlight module is visible light.

4. The under-screen fingerprint identification apparatus according to claim 2, wherein the fingerprint identification module is fixed to a bottom plate of the middle frame of the liquid crystal display screen; wherein the bottom plate of the middle frame is provided with a first opening in an area opposite to the fingerprint identification module, and the first opening is configured to allow the fingerprint detection light that passes through the backlight module to pass through the middle frame and be transmitted to the fingerprint identification module.

5. The under-screen fingerprint identification apparatus according to claim 4, wherein the backlight module comprises an optical film configured to allow the fingerprint detection light to pass through, and a steel plate configured to support the optical film, wherein the fingerprint identification module is disposed under the steel plate, and the steel plate is provided with a second opening in an area corresponding to the fingerprint identification module, and the second opening is configured to allow the fingerprint detection light that passes through the optical film to pass through the steel plate and be transmitted to the fingerprint identification module; wherein the second opening corresponds to the light-transmitting area.

6. The under-screen fingerprint identification apparatus according to claim 2, wherein a steel plate of the backlight module is provided with a second opening in an area corresponding to the fingerprint identification module, the fingerprint identification module is disposed at the second opening, and the fingerprint identification module is attached to a bottom of the steel plate or the optical film.

7. The under-screen fingerprint identification apparatus according to claim 6, wherein the fingerprint identification module is attached to the bottom of the steel plate by bonding or welding, or the fingerprint identification module is attached to the bottom of the steel plate through an optical glue; and/or
the under-screen fingerprint identification apparatus further comprises a reinforcing plate, and the fingerprint identification module is disposed in the middle frame through the reinforcing plate, so that the fingerprint identification module is attached to the bottom of the steel plate or the optical film.

8. The under-screen fingerprint identification apparatus according to claim 6, wherein a bottom plate of the middle frame is further provided with a third opening configured to accommodate the fingerprint identification module, so that the fingerprint identification module passes through the third opening and is attached to the bottom of the steel plate or the optical film.

9. The under-screen fingerprint identification apparatus according to any one of claims 4 to 8, wherein the liquid crystal display screen comprises a liquid crystal panel and the protective cover located on the liquid crystal panel, and at least part of the detection light source is located under an edge area of the protective cover and at one side of the backlight module.

10. The under-screen fingerprint identification apparatus according to claim 9, wherein the protective cover is provided with an accommodation space at a position opposite to the detection light source, so that at least part of the detection light source is located in the accommodation space and is attached to the protective cover.

11. The under-screen fingerprint identification apparatus according to claim 9, wherein a quantity of the detection light source is two or more, the detection light sources are arranged in parallel on a substrate, and the detection light sources are bonded or welded to a lower surface of the protective cover through the substrate.

12. The under-screen fingerprint identification apparatus according to claim 11, wherein the detection light sources are symmetrically distributed on two sides of the fingerprint identification module, and a vertical distance between the detection light source and a center of the fingerprint identification module is less than or equal to 20 mm.

13. The under-screen fingerprint identification apparatus according to any one of claims 4 to 8, wherein the detection light source is attached to the bottom plate of the middle frame and is located under the backlight module, and the detection light source is located at a periphery of the fingerprint identification module, wherein the steel plate and the middle frame are respectively provided with a fourth opening and a fifth opening at positions opposite to the detection light source, so that the probe light emitted from the detection light source can pass through the middle frame and the steel plate and irradiate the finger above the fingerprint detection area.

14. The under-screen fingerprint identification apparatus according to claim 13, wherein the fifth opening is communicated with the third opening or the first opening, or, the fifth opening and the third opening or the fifth opening, are two independent opening structures.

15. The under-screen fingerprint identification apparatus according to any one of claims 4 to 8, wherein the detection light source is attached to the steel plate and is located under the optical film, and the detection light source is located at a periphery of the fingerprint identification module, wherein the steel plate is provided with a fourth opening at a position opposite to the detection light source, so that the probe light emitted from the detection light source can pass through the steel plate and irradiate the finger above the fingerprint detection area.

16. The under-screen fingerprint identification apparatus according to claim 15, further comprising a substrate configured to support the detection light source, and the detection light source is attached to the middle frame or the steel plate through the substrate.

17. The under-screen fingerprint identification apparatus according to claim 15, wherein the detection light source is symmetrically distributed at the periphery of the fingerprint identification module, and a vertical distance between the detection light source and a center of the fingerprint identification module is less than or equal to 15 mm.

18. The under-screen fingerprint identification apparatus according to claim 15, wherein the detection light source and the fingerprint identification module are of a split structure, or, the detection light source and the fingerprint identification module are of an integrated structure.

19. The under-screen fingerprint identification apparatus according to any one of claims 4 to 8, wherein the detection light source and the fingerprint identification module are attached to a lower side of the steel plate or the optical film through a fixing member.

20. The under-screen fingerprint identification apparatus according to claim 1, wherein the fingerprint identification module comprises a filter and a fingerprint sensor, and the filter is disposed above the fingerprint sensor and configured to filter out other infrared light or interference light than a waveband of the fingerprint detection light, and the fingerprint sensor comprises an optical sensing array with a plurality of optical sensing units configured to receive fingerprint detection light that passes through the filter to obtain the fingerprint image of the finger.

21. The under-screen fingerprint identification apparatus according to claim 20, wherein the fingerprint sensor is carried above a reinforcing plate, and is connected to a flexible circuit board above the reinforcing plate through a metal lead, wherein the flexible circuit board is hollowed out or slotted in an area of the fingerprint sensor to provide an avoidance space that accommodates the fingerprint sensor.

22. The under-screen fingerprint identification apparatus according to claim 21, wherein the fingerprint sensor further comprises an optical path guiding structure formed above the optical sensing array by a semiconductor process, the optical path guiding structure comprises a micro-lens array and a plurality of light blocking layers located between the micro-lens array and the optical sensing array, the plurality of light blocking layers respectively define a plurality of transmission optical paths between the micro-lens array and the optical sensing array through apertures, and each micro-lens of the micro-lens array is configured to respectively focus the fingerprint detection light to a transmission optical path corresponding to the micro-lens, and the fingerprint detection light is transmitted to a corresponding optical sensing unit through the transmission optical path.

23. The under-screen fingerprint identification apparatus according to claim 22, wherein the filter is directly formed above the optical sensing array or the optical path guiding structure of the fingerprint sensor by coating.

24. The under-screen fingerprint identification apparatus according to claim 20, wherein the fingerprint identification module further comprises a microscopic lens having at least one spherical or aspheric lens and a physical component configured to carry the microscopic lens, wherein the physical component comprises a lens barrel or a lens holder, which is disposed above a flexible circuit board and forms an enclosed space with the flexible circuit board, wherein the fingerprint sensor and the filter above the fingerprint sensor are disposable in the enclosed space, and are located in a convergent optical path of the microscopic lens to implement fingerprint optical imaging.

25. A liquid crystal display fingerprint identification system, applied to an electronic device with a middle frame, comprising: a liquid crystal display screen, and an under-screen fingerprint identification apparatus according to any one of claims 1 to 24, wherein the under-screen fingerprint identification apparatus is located under the liquid crystal display screen, and a fingerprint detection area of the under-screen fingerprint identification apparatus is at least partially located in a display area of the liquid crystal display screen.

26. The liquid crystal display fingerprint identification system according to claim 25, wherein the under-screen fingerprint identification apparatus comprises a detection light source and a fingerprint identification module located under the liquid crystal display screen; and the detection light source is disposed under a protective cover or a backlight module of the liquid crystal display screen.

27. The under-screen fingerprint identification apparatus according to claim 26, wherein the liquid crystal display screen comprises a liquid crystal panel and the protective cover located on the liquid crystal panel, and at least part of the detection light source is located under an edge area of the protective cover and on one side of the backlight module.

28. The liquid crystal display fingerprint identification system according to claim 26, wherein the protective cover is provided with an accommodation space at a position opposite to the detection light, so that at least part of the detection light source is located in the accommodation space and is attached to the protective cover.

29. The liquid crystal display fingerprint identification system according to claim 28, wherein an inner wall of the accommodation space is provided with a shielding layer, and the shielding layer is made of a material transparent to the probe light and/or the fingerprint detection light.

30. The liquid crystal display fingerprint identification system according to claim 29, wherein the shielding layer extends to other non-display area of the protective cover to cover a lower surface of the non-display area; and
the probe light and/or the fingerprint detection light is infrared light, and the shielding layer is an infrared transparent ink.

31. The liquid crystal display fingerprint identification system according to claim 25, wherein an under-screen buffer area is provided between the liquid crystal display screen and the middle frame configured to support the liquid crystal display screen, and the under-screen buffer area is filled with a buffer material.

32. An electronic device, comprising a middle frame and the liquid crystal display fingerprint identification system according to any one of claims 25 to 31.
